# FASCICULE DE BREVET EUROPEEN

(11) **EP 2 321 234 B1**
(45) Date de publication et mention de la délivrance du brevet: **06.06.2012**
(21) Numéro de dépôt: 09779967.0
(22) Date de dépôt: 26.06.2009
(51) Int. Cl.: C04B 26/28

(54) **MATERIAU DE REVETEMENT DESTINE A LA CONSTRUCTION ROUTIERE**
BESCHICHTUNGSMATERIAL FÜR DEN STRASSENBAU
COATING MATERIAL FOR ROAD CONSTRUCTION

(30) Priorité: 27.06.2008 FR 0803638
(43) Date de publication de la demande: 18.05.2011
(73) Titulaire: Institut National Polytechnique De Toulouse (INPT), 31029 Toulouse Cedex 4 (FR); Fayolle & Fils SA, 95230 Soisy Sous Montmorency (FR); Dubrac T.P. SA, 93200 Saint Denis (FR)
(72) Inventeur: VACA-GARCIA, Carlos, F-31400 Toulouse (FR)
(74) Mandataire: Ravina, Bernard
(86) Numéro de dépôt international: PCT/EP2009/058040
(87) Numéro de publication internationale: WO 2010/003838

(56) Documents cités:
- EP-A- 0 781 732
- FR-A- 1 252 391
- US-A- 2 393 525
- US-A- 5 432 213
- HEINZE ET AL: "Unconventional cellulose esters: synthesis, characterization and structure-property relations" CELLULOSE, vol. 10, no. 3, 2003, pages 283-296, XP002515131 Kluwer Academic Publishers cité dans la demande
- SEALEY, J. ET AL: "Novel celllulose derivatives. IV. Preparation and thermal analysis of waxy esters of cellulose" J. POLYM. SCI - PART B: POLYMER PHYSISC, vol. 34, no. 9, 1996, pages 1613-1620, XP002515150 J. Wiley & Sons

## Description

La présente invention appartient au domaine des matériaux de revêtement de la voirie, notamment des chaussées et des trottoirs, et plus particulièrement des liants d'enrobage des granulats destinés aux constructions routières et de génie civil.

Elle a pour objet un enrobé comprenant un liant non bitumeux, obtenu à partir de matières premières d'origine végétale ainsi que le liant lui-même. Un procédé de préparation d'un enrobé à l'aide dudit liant est également un objet de l'invention.

Les enrobés classiques sont des mélanges de bitume (à hauteur d'environ 5%) avec des granulats concassés de différentes tailles, dans lesquels le bitume assure le lien entre ces différents granulats. Ils peuvent être additionnés ou non d'élastomères et/ou de polymères thermoplastiques favorisant leur maniabilité et améliorant leur comportement viscoélastique. Ils sont principalement utilisés pour la construction et l'entretien de la voirie. C'est le cas en France, où les bitumes sont utilisés à 90% pour la réalisation de routes, et seulement 10% pour des usages industriels.

Le bitume est un mélange de carbures d'hydrogène, obtenu à partir de la distillation ou de l'oxydation, le plus souvent en raffinerie, de qualités particulières de pétrole brut. Le pétrole étant de nature fossile, le bitume est produit à partir d'une matière première non renouvelable.

De nos jours, les enrobés bitumeux pour la construction des chaussées doivent répondre à des exigences technologiques nouvelles, conjuguant des propriétés telles que l'étanchéité, la cohésion, l'élasticité, l'isolation, l'insonorisation, le collage, la protection... A titre d'exemple, les enrobés innovants permettent de confectionner des routes drainantes, diminuant l'épaisseur du film d'eau à la surface du revêtement, des routes rétro-réfléchissants pour une meilleure visibilité en fonction des conditions climatiques ou des routes permettant d'amoindrir considérablement les nuisances sonores provoquées par la circulation routière.

Outre la forte dimension technologique de ces enrobés en fonction des différents usages auxquels ils sont destinés, les formulations pour bitume routier doivent dorénavant réduire leur impact environnemental par la recyclabilité et la durabilité des matériaux mis en oeuvre. Il est nécessaire en premier lieu de diminuer la consommation énergétique sur les chantiers routiers, mais aussi de veiller à améliorer les conditions de travail du personnel sur le terrain, en réduisant les émanations de composés volatils nocifs, voire cancérigènes, et les températures de dépôt des enrobés. Ces exigences sont d'autant plus impérieuses que le trafic routier, de plus en plus intense, accroît les volumes d'enrobés bitumeux employés dans la construction des chaussées.

L'emploi de matières premières d'origine végétale peut être envisagé comme une solution pour répondre à ces défis. La solution proposée par la présente invention est de remplacer totalement le bitume par un liant issu d'une matière première végétale, plus précisément par un composé cellulosique, pour produire des enrobés ne contenant pas de dérivés pétrochimiques.

On connaît la demande FR 2768150 (SAADA) concernant un liant à base de bitume dans lequel est introduit un additif d'origine végétale, jouant le rôle de fluxant. Le fluxant est un ester d'acides gras obtenu par transestérification d'huiles végétales, en présence d'un catalyseur de polymérisation. Les huiles employées sont des esters méthyliques d'huiles de colza, de fin ou de tournesol, ayant éventuellement été préalablement isomérisées.

La demande FR 289 1838 (COLAS) décrit quant à elle un procédé de préparation d'un fluxant non toxique à base de matières grasses d'origine naturelle, par transestérification par au moins un alcanol ou un mono-alcool. Ce fluxant fonctionnalisé est utilisé comme additif pour la réalisation d'un enrobé à base de bitume destiné au revêtement routier et aux travaux de génie civil.

Ces liants contiennent des composés d'origine végétale qui jouent un rôle de fluidifiant ou de fluxant du bitume, sans remplacer le bitume lui-même, ce dernier restant le composant principal de l'enrobé.

La demande européenne EP 1466878 décrit la préparation de liants pour la réalisation d'ouvrages routiers et de génie civil, à partir de résines d'origine végétale, naturelles ou modifiées, en mélange avec une huile végétale brute ou raffinée, éventuellement chimiquement modifiée, ayant une viscosité déterminée. L'ajout d'un émulsifiant est nécessaire pour leur mise en oeuvre.

On connaît également des liants à base de résines de synthèse, qui contiennent des composés d'origine végétale. Le brevet US 5 432 213 décrit une composition pour la fabrication de blocs de dallage des sols, qui comprend un granulat minéral et une résine thermodurcissable de type résine époxy. L'effet liant de la résine est renforcé par l'ajout d'un composé cellulosique. Les dalles obtenues par moulage à chaud sont aptes à être posées sur une chape de ciment ou d'asphalte

La présente invention vise à de remédier aux inconvénients précités, sans affecter les performances physico-chimiques et mécaniques de l'enrobé (résistance mécanique, imperméabilité, ...), ni les conditions de sa mise en oeuvre dans les applications routières.

Un but de l'invention est d'offrir des enrobés de revêtement routier, fabriqué à l'aide d'un liant formulé à partir de matières premières renouvelables d'origine végétale. Un objectif particulièrement recherché est de proposer un liant routier non bitumeux, à savoir un liant totalement dépourvu de bitume ou d'autres substances pétrochimiques. Un autre but de l'invention est de disposer d'une gamme de liants pour enrobés présentant une température de fusion modérée permettant son ramollissement et son mélange avec un granulat sans apport excessif d'énergie, mais pouvant acquérir une dureté suffisante aux températures d'utilisation comme revêtement routier. Un autre but de l'invention est de proposer un enrobé plus sain pour les personnes les manipulant, en particulier grâce à l'emploi de liants dépourvus de solvants ou autres composés nocifs hautement volatils aux températures de mise en oeuvre.

Un autre but encore de l'invention est de proposer un liant doté d'un bon pouvoir d'enrobage thermique des granulés et possédant toutes les caractéristiques de viscoélasticité ainsi que les propriétés physico-chimiques qui définissent les enrobés bitumeux ou les bitumes employés usuellement pour le revêtement des chaussées, de manière à pouvoir le préparer avec les équipements conventionnels, sans avoir à investir dans une installation spécifique. Enfin, un autre objectif de la présente invention est de réaliser un enrobé à la fois durable, recyclable, et de mise en oeuvre facile.

Les inventeurs ont trouvé qu'il était possible de réaliser les objectifs précités grâce à un matériau de revêtement routier qui utilise, en tant que liant du granulat, un polymère consistant en un dérivé de cellulose, plus précisément en un ester gras de cellulose.

La cellulose, présente dans la paroi cellulaire des plantes, est le composant fondamental des tissus de soutien des végétaux. Elle est la substance organique la plus abondante sur terre et est donc une source de carbone infiniment renouvelable. Ce biopolymère macromoléculaire à très longues chaînes stéréorégulières formées de maillons de glucose possède une multitude de fonctions hydroxyles. Il est possible de travailler sur ces fonctions réactives pour lui conférer des propriétés particulières vis-à-vis des granulats. Cette réactivité n'avait jamais été mise à profit pour réaliser des compositions pouvant être utilisées dans le domaine du génie civil. En effet, les esters gras, c'est-à-dire ceux dont la fonction ester comporte une chaîne carbonée de huit atomes de carbone ou davantage, présentent un caractère apolaire, contrairement aux esters plus courts tel que l'acétate de cellulose qui est plutôt polaire. Les granulats minéraux ayant eux-mêmes un caractère polaire, ils ont une affinité naturelle pour les acétates, les liants apolaires étant présumés incompatibles avec une adhésion correcte avec le granulat.

Or est apparu que, bien que la cellulose estérifiée par un composé gras soit nettement hydrophobe (contrairement à la cellulose non greffée qui est nettement hydrophile ou aux dérivés polaires susmentionnés), elle pouvait cependant présenter une affinité élevée et satisfaisante avec une charge minérale dont le caractère polaire est marqué. De manière surprenante, un liant organique présentant une bonne affinité pour un granulat minéral a été obtenu, avec des propriétés physiques et mécaniques requises pour l'application recherchée, sans qu'il soit nécessaire de leur adjoindre un quelconque additif. Il s'est avéré intéressant en outre, d'utiliser la possibilité de jouer sur le degré de substitution, pour obtenir des liants de rigidité choisie.

De manière surprenante, il est apparu aussi que les esters gras de cellulose pouvaient remplacer totalement le bitume dans la préparation des enrobés, ce qui permet de qualifier ces liant de non bitumeux. Ce liant s'est révélé présenter de nombreux avantages permettant de préparer un nouvel enrobé, répondant au cahier des charges exposé plus haut.

Ainsi, la présente invention a pour objet un matériau de revêtement destiné à la construction routière et au génie civil, constitué d'un granulat minéral et d'un liant non bitumeux constitué d'un composé cellulosique appartenant à la famille des esters gras de cellulose.

Les réactions d'obtention d'esters de cellulose sont connues. Elles peuvent être réalisées sous des conditions de température et de durée de réaction définies pour aboutir à une substitution totale ou partielle des groupements hydroxyles présents sur le polysaccharide, selon les spécifications du dérivé recherchées. On procède selon une des méthodes connues que l'homme de l'art sait mettre en oeuvre ou selon une autre méthode spécifiquement adaptée. De telles méthodes sont décrites par exemple dans l'article "Unconventional methods in cellulose functionalization" (T. Heinz et coll., Prog. Polym. Sci., 26 (2001), pp. 1689-1762, Elsevier)

Selon une caractéristique avantageuse du matériau selon l'invention, la température de fusion dudit composé cellulosique est comprise entre 60°C et 250°C, de préférence entre 120°C et 180°C. Cette température est celle à laquelle est habituellement réalisé le mélange avec la charge minérale et l'épandage de l'enrobé.

Selon une autre caractéristique avantageuse du matériau objet de l'invention, la température de transition vitreuse dudit composé cellulosique est comprise entre -50°C et 120°C, de préférence entre -20°C et 70°C. La température de transition vitreuse, notée Tg, correspond à un changement d'état du polymère sous l'action de la température entraînant des variations importantes de ses propriétés mécaniques. Les composés cellulosiques dont la valeur de la température de transition vitreuse répond à la définition ci-dessus sont choisis car particulièrement adaptés à une application pour revêtement routier, leur Tg étant dans une gamme de températures proches de celles que peut connaître une route dans différentes conditions climatiques.

Le squelette cellulosique dudit composé peut être constitué de cellulose ayant un degré de polymérisation compris entre 800 et 1200. On peut aussi utiliser des pâtes de cellulose. Selon un mode de réalisation préféré du liant objet de l'invention, le squelette cellulosique dudit composé cellulosique représente de 10% à 50% en masse rapportée à la masse totale dudit composé, et de préférence de 20% à 30%.

Les propriétés d'hydrophobicité et de thermoplasticité de la cellulose après modification varient avec la nature et la longueur de la chaîne greffée et avec le degré de substitution. C'est pourquoi, selon un mode de réalisation préféré du matériau objet de l'invention, ledit composé cellulosique appartient à la famille des esters aliphatiques de cellulose, dont les groupements estérifiants comprennent de 8 à 18 atomes de carbone. Ces esters aliphatiques peuvent être linéaires ou ramifiés. On choisira l'un ou l'autre selon la souplesse ou la rigidité recherchée pour le liant.

Les esters de cellulose sont greffés par des chaînes estérifiantes qui substituent totalement ou partiellement les groupements hydroxyles des cycles du glucose de la cellulose, avec un degré de substitution DS plus ou moins poussé. De préférence, ledit composé cellulosique est substitué par des groupements estérifiants avec un degré de substitution allant de 0,9 à 3,0. Chaque cycle de glucose d'un composé cellulosique peut donc être mono-, di- ou tri-substituée.

Dans un mode de réalisation particulier du matériau selon l'invention, les groupements estérifiants du composé cellulosique sont des radicaux hydrocarbonés saturés choisis parmi les groupements dont le nombre d'atomes de carbone est C₂ₙ, avec 4 ≤ n ≤ 9, ou un mélange de ceux-ci. On obtient après estérification les octanoates de cellulose, les décanoates de cellulose, les laurates de cellulose, les myristates de cellulose, les palmitates de cellulose, et les stéarates de cellulose.

Dans un autre mode de réalisation particulier du liant selon l'invention, les groupements estérifiants du composé cellulosique sont des radicaux hydrocarbonés insaturés choisis parmi les groupements dont le nombre d'atomes de carbone est C₂ₙ, avec n = 9, et dont le nombre de liaisons insaturées est i = 1 ou 2, ou un mélange de ceux-ci. Dans ce cas, on utilise comme agent estérifiant, l'acide oléique C18:1 ou l'acide linoléique C18:2.

Finalement, dans le matériau selon l'invention, le composé cellulosique peut-être un ester mixte comprenant des groupements estérifiants différents, saturés ou insaturés, tels que définis ci-dessus.

La modification des groupements hydroxyles de la cellulose en esters à longue chaîne aliphatique modifie et améliore considérablement la la biorésistance, la solubilité, mais surtout dans notre cas, l'hydrophobicité et la thermoplasticité de la cellulose, la rendant apte à une utilisation en tant que liant d'un matériau de revêtement des routes et de la voirie.

Les caractéristiques du matériau de revêtement routier selon l'invention découlent en partie de celles du liant comme il a été expliqué précédemment. Il est aussi caractérisé par le mélange de ses ingrédients. Ainsi, le matériau selon l'invention peut comprendre avantageusement entre 1 % et 20 % de liant en teneur pondérale rapportée au matériau. De préférence il comprend entre 4 % et 10 % de liant.

L'enrobé non bitumeux selon l'invention peut être préparé en mélangeant le liant à un sable et/ou gravier de granulométrie convenable pour l'usage prévu, en suivant la procédure communément utilisée pour la préparation des enrobés bitumeux conventionnels. Les équipements des professionnels n'ont donc pas à être changés ni modifiés.

Les tests d'épandage sur sol ont montré que cet enrobé s'étale aussi facilement qu'un enrobé bitumeux et qu'en outre il est beaucoup plus aisé à manipuler car il ne colle pas aux instruments ni aux chaussures. Ce faisant, il durcit au moins aussi rapidement.

Le matériau de revêtement non bitumeux est donc particulièrement adapté à la réalisation d'un revêtement routier. Ainsi, est objet de l'invention un procédé de préparation d'un matériau de revêtement destiné à la construction routière et au génie civil, selon lequel on mélange un granulat minéral (pouvant être un matériau recyclé) et un liant non bitumeux constitué d'un composé cellulosique appartenant à la famille des esters gras de cellulose tel que décrit précédemment, à une température supérieure à la température de fusion dudit liant.

La présente invention sera mieux comprise, et des détails en relevant apparaîtront, à la lumière de la description qui va être faite de différentes variantes de réalisation.

### Exemple 1 : Synthèse d'un liant non bitumeux

### 1) - Trioctanoate de cellulose

La réaction d'estérification de la cellulose est réalisée en faisant réagir de la cellulose de type α avec un agent d'estérification puissant, à savoir un chlorure d'acide carboxylique à huit atomes de carbone, le chlorure d'octanoyle. La réaction est conduite jusqu'à substitution totale des groupes hydroxyles de la cellulose par les chaînes estérifiantes d'octanoyle, soit un degré de substitution DS = 3, pour obtenir le trioctanoate correspondant.

Produits utilisés :

| Dénomination | Informations | Quantité |
|---|---|---|
| | CAS : 9004-34-6 | |
| Cellulose α (Aldrich) | M = 162 g/mol | 20 g (0,345 mol) |
| | 7% d'humidité | |
| | CAS: 111-64-8 | 0,118 l |
| Chlorure d'octanoyle 99% (Aldrich) | d = 0,953 | (2 équivalents par OH) |
| | M = 162,66 g/mol | |

L'obtention du trioctanoate de cellulose est confirmée par analyse élémentaire.

### 2) - Octanoate de cellulose avec DS inférieur à 3

Des octanoates de cellulose de différents degrés de substitution ont été synthétisés en faisant varier la quantité de chlorure d'octanoyle ajoutée par rapport à la quantité de cellulose initiale dans le réacteur (entre 1,0 et 1,5 équivalents par OH).

On obtient des octanoates de DS = 2,4 et DS = 1,9, confirmé par analyse élémentaire.

### 3) - Caractérisation

La température de transition vitreuse Tg des esters obtenus a été déterminée par DMA (Analyse Thermique Dynamique) et la température de fusion Tf par des essais d'obtention de films par thermopressage. Les différents résultats sont présentés dans le tableau 1.

**TABLEAU 1 : Degré de substitution, température de transition vitreuse et température de fusion des différents octanoates de cellulose obtenus**

| DS | Tg | Tf |
|---|---|---|
| 3,0 | 46°C | 60°C |
| 2,4 | 49°C | 70°C |
| 1,9 | 80°C | >200°C |

Nous constatons que pour un DS de 3 et de 2,4, une valeur de Tf relativement basse est obtenue avec en même temps, des films thermopressés à partir de 60°C. La mise en oeuvre de ces esters est plus aisée que celle de l'ester à DS 1.9, dont la température de fusion est plus élevée.

### Exemple 2 : Autres formulations

### 1) Laurate et stéarate de cellulose

D'autres liants ont été synthétisés selon le même procédé que précédemment, en faisant varier la nature de la chaîne grasse et le degré de substitution. La réaction d'estérification de la cellulose de type α a été réalisée avec des chlorures d'acide carboxylique à douze et à dix-huit atomes de carbone (chlorure de lauroyle et chlorure de stéaroyle). La réaction a été conduite de manière à obtenir différents degrés de substitution des groupes hydroxyles de la cellulose par les chaînes estérifiantes.

Produits utilisés :

| Dénomination | Informations | Quantité |
|---|---|---|
| | CAS : 9004-34-6 | |
| Cellulose α (Aldrich) | M = 162 g/mol | 10 g (0.172 mol) |
| | 7% d'humidité | |
| | CAS: 112-16-3 | entre 0,5 et 2,5 équivalents par OH |
| Chlorure de lauroyle 99% (Aldrich) | d = 0,946 | |
| | M = 218,76 g/mol | |
| | CAS: 112-76-5 | entre 0,5 et 2,5 équivalents par OH |
| Chlorure de stéaroyle 98% (Fluka) | d = 0,897 | |
| | M = 302,92 | |

L'obtention de laurate de cellulose et de stéarate de cellulose est confirmée par analyse élémentaire. Les degrés de substitution obtenus sont reportés dans le tableau 2.

**TABLEAU 2 : Esters de cellulose et degrés de substitution**

| Dénomination | Degré de substitution |
|---|---|
| | 3 |
| Laurate de cellulose | 2.1 |
| | 0.6 |
| | 2.9 |
| Stéarate de cellulose | 1.7 |
| | 0.5 |

### 2) - Caractérisation

La température de transition vitreuse Tg a été déterminée par DMA (Analyse Thermique Dynamique) et la température de fusion Tf par des essais d'obtention de films par thermopressage. Les différents résultats sont présentés dans le tableau 3.

Nous constatons que pour des DS relativement élevés, nous avons des valeurs Tg relativement faibles.

**Tableau 3 : Degré de substitution, température de transition vitreuse et température de fusion des différents laurates et stéarates de cellulose obtenus**

| Dénomination | DS | Tg | Tf |
|---|---|---|---|
| | 3,0 | 40°C | 45°C |
| Laurate de cellulose | 2,1 | 50°C | 90°C |
| | 0,6 | >200°C | >200°C |
| | 2,9 | 45°C | 50°C |
| Stéarate de cellulose | 1,7 | 60°C | 90°C |
| | 0,5 | >200°C | >200°C |

### Exemple 3 : Enrobé non bitumeux

Un enrobé non bitumeux a été préparé en conditions de production (500 kg) à partir d'un liant composé d'octanoate de cellulose comprenant 30% de cellulose avec un degré de substitution DS = 3, tel que décrit à l'exemple1, et d'un granulat de type porphyre. Le granulat et le liant ont été mélangés à proportion de 94/6, durant 2 minutes, à la température de 170°C. On obtient un mélange pâteux de couleur gris foncé.

L'enrobé ainsi obtenu a été déversé sur une chaussée et étalé à la pelle puis compactés à l'aide d'un rouleau compresseur. Il a été constaté que sa maniabilité et son comportement viscoélastique étaient tout à fait comparables à ceux des enrobés conventionnels. A la grande satisfaction des opérateurs, il est apparu que la manipulation du revêtement était facilité car peu collant permettant d'y marcher dessus sans inconvénient, mais aussi rendant plus aisé l'emploi et le nettoyage des outils. L'odeur qui se dégageait rappelait celle de l'huile chaude mais pas celle des composés bitumineux. Après quelques heures, l'observation de l'évolution de la consistance de la couche a montré que son durcissement se déroulait normalement.

Un essai a également été effectué en mélangeant le liant précédent avec une charge minérale calcaire, en proportion K92/L8. Les mêmes résultats que précédemment ont pu être observés sur l'enrobé.

Un autre enrobé a été préparé à partir de laurate de cellulose ayant un degré de substitution DS = 3, mélangé avec une charge minérale de type porphyre. Les résultats de qualité obtenus sont les mêmes que ci-dessus.

## Revendications

1. Matériau de revêtement destiné à la construction routière et au génie civil, **caractérisé en ce qu'**il est composé i) d'un granulat minéral et ii) d'un liant non bitumeux constitué d'un composé cellulosique appartenant à la famille des esters gras de cellulose.

2. Matériau de revêtement selon la revendication 1, **caractérisé en ce Que** la température de fusion dudit composé cellulosique est comprise entre 60°C et 250°C, de préférence entre 120°C et 180°C.

3. Matériau de revêtement selon l'une des revendications 1 ou 2, **caractérisé en ce que** la température de transition vitreuse dudit composé cellulosique est comprise entre -50°C et 120°C, de préférence entre -20°C et 70°C.

4. Matériau de revêtement selon l'une des revendications précédentes, **caractérisé en ce Que** le squelette cellulosique dudit composé cellulosique représente de 10% à 50% en masse rapportée à la masse totale dudit composé, et de préférence de 20% à 30%.

5. Matériau de revêtement selon l'une des revendications précédentes, **caractérisé en ce Que** ledit composé cellulosique appartient à la famille des esters aliphatiques de cellulose, dont les groupements estérifiants comprennent de 8 à 18 atomes de carbone.

6. Matériau de revêtement selon la revendication précédente, **caractérisé en ce que** ledit composé cellulosique est substitué par des groupements estérifiants avec un degré de substitution allant de 0,9 à 3,0.

7. Matériau de revêtement selon l'une des revendications précédentes, **caractérisé en ce que** les groupements estérifiants du composé cellulosique sont des radicaux hydrocarbonés saturés choisis parmi les groupements dont le nombre d'atomes de carbone est C₂ₙ, avec 4 ≤ n ≤ 9, ou un mélange de ceux-ci.

8. Matériau de revêtement selon l'une des revendications 1 à 6, **caractérisé en ce que** les groupements estérifiants du composé cellulosique sont des radicaux hydrocarbonés insaturés choisis parmi les groupements dont le nombre d'atomes de carbone est C₂ₙ, avec n = 9, et dont le nombre de liaisons insaturées est i = 1 ou 2, ou un mélange de ceux-ci.

9. Matériau de revêtement selon les revendications 7 et 8, **caractérisé en ce que** le composé cellulosique est un ester mixte comprenant des groupements estérifiants différents, saturés ou insaturés.

10. Matériau selon l'une quelconque des revendications précédentes, **caractérisé en ce qu'**il comprend entre 1 % et 20% de liant, de préférence entre 4% et 10% de liant, en teneur pondérale rapportée au matériau.

11. Procédé de préparation d'un matériau de revêtement destiné à la construction routière et au génie civil selon l'une des revendications précédentes, **caractérisé en ce que** l'on mélange un granulat minéral et un liant non bitumeux constitué d'un composé cellulosique appartenant à la famille des esters gras de cellulose, à une température supérieure à la température de fusion dudit liant.

## Claims

1. Coating material that is designed for road construction and civil engineering, **characterized in that** it consists of i) a mineral granulate and ii) a non-bituminous binder that consists of a cellulose compound that belongs to the family of cellulose fatty esters.

2. Coating material according to Claim 1, wherein the melting point of said cellulose compound is between 60°C and 250°C, preferably between 120°C and 180°C.

3. Coating material according to one of Claims 1 or 2, wherein the glass transition temperature of said cellulose compound is between -50°C and 120°C, preferably between -20°C and 70°C.

4. Coating material according to one of the preceding claims, wherein the cellulose skeleton of said cellulose compound represents 10% to 50% by mass relative to the total mass of said compound, and preferably 20% to 30%.

5. Coating material according to one of the preceding claims, wherein said cellulose compound belongs to the family of aliphatic cellulose esters, whose esterifying groups comprise 8 to 18 carbon atoms.

6. Coating material according to the preceding claim, wherein said cellulose compound is substituted by esterifying groups with a degree of substitution that ranges from 0.9 to 3.0.

7. Coating material according to one of the preceding claims, wherein the esterifying groups of the cellulose compound are saturated hydrocarbon radicals that are selected from among the groups whose carbon atom number is C₂ₙ, with 4 ≤ n ≤ 9, or a mixture of the latter.

8. Coating material according to one of Claims 1 to 6, wherein the esterifying groups of the cellulose compound are unsaturated hydrocarbon radicals that are selected from among groups whose carbon atom number is C₂ₙ, with n = 9, and whose number of unsaturated bonds is i = 1 or 2, or a mixture of the latter.

9. Coating material according to Claims 7 and 8, wherein the cellulose compound is a mixed ester that comprises the different esterifying groups, saturated or unsaturated.

10. Material according to any of the preceding claims, wherein it comprises between 1% and 20% of binder, preferably between 4% and 10% of binder, of content by weight relative to the material.

11. Process for preparation of a coating material that is designed for road construction and civil engineering according to one of the preceding claims, wherein a mineral granulate and a non-bituminous binder that consists of a cellulose compound that belongs to the family of cellulose fatty esters are mixed at a temperature that is higher than the melting point of said binder.

## Patentansprüche

1. Beschichtungsmaterial, das für den Straßenbau und die Bautechnik bestimmt ist, **dadurch gekennzeichnet, dass** es sich aus i) einer Gesteinskörnung und ii) einem nichtbituminösen Bindemittel zusammensetzt, wobei letzteres aus einer cellulosehaltigen Verbindung besteht, die zur Familie der Cellulose-Fettsäureester gehört.

2. Beschichtungsmaterial nach Anspruch 1; **dadurch gekennzeichnet, dass** die Schmelztemperatur der cellulosehaltigen Verbindung im Bereich von 60 °C bis 250 °C, vorzugsweise von 120 °C bis 180 °C, liegt.

3. Beschichtungsmaterial nach einem der Ansprüche 1 oder 2; **dadurch gekennzeichnet, dass** die Glasübergangstemperatur der cellulosehaltigen Verbindung im Bereich von -50 °C bis 120 °C, vorzugsweise von -20 °C bis 70 °C, liegt.

4. Beschichtungsmaterial nach einem der vorhergehenden Ansprüche, **dadurch gekennzeichnet, dass** das Cellulosegerüst der cellulosehaltigen Verbindung 10 bis 50 Massen-% von der Gesamtmasse der Verbindung ausmacht, und vorzugsweise 20 % bis 30 %.

5. Beschichtungsmaterial nach einem der vorhergehenden Ansprüche, **dadurch gekennzeichnet, dass** die cellulosehaltige Verbindung zur Familie der aliphatischen Celluloseester gehört, wobei deren esterbildende Gruppen 8 bis 18 Kohlenstoffatome umfassen.

6. Beschichtungsmaterial nach dem vorhergehenden Anspruch, **dadurch gekennzeichnet, dass** die cellulosehaltige Verbindung mit esterbildenden Gruppen substituiert ist, wobei der Substituierungsgrad 0,9 bis 3,0 beträgt.

7. Beschichtungsmaterial nach einem der vorhergehenden Ansprüche, **dadurch gekennzeichnet, dass** die esterbildenden Gruppen der cellulosehaltigen Verbindung gesättigte Kohlenwasserstoffreste sind, die aus den Gruppen ausgewählt sind, deren Anzahl an Kohlenstoffatome C₂ₙ beträgt, mit 4 ≤ n ≤ 9, oder aus einer Mischung derselben.

8. Beschichtungsmaterial nach einem der Ansprüche 1 bis 6, **dadurch gekennzeichnet, dass** die esterbildenden Gruppen der cellulosehaltigen Verbindung ungesättigte Kohlenwasserstoffreste sind, die aus den Gruppen ausgewählt sind, deren Anzahl an Kohlenstoffatomen C₂ₙ beträgt, mit n = 9, und deren Anzahl an ungesättigten Bindungen i = 1 oder 2 beträgt, oder aus einer Mischung derselben.

9. Beschichtungsmaterial nach einem der Ansprüche 7 und 8, **dadurch gekennzeichnet, dass** die cellulosehaltige Verbindung ein Mischester ist, der verschiedenartige, gesättigte oder ungesättigte, esterbildende Gruppen umfasst.

10. Material nach einem beliebigen der vorhergehenden Ansprüche, **dadurch gekennzeichnet, dass** es zwischen 1 % und 20 % an Bindemittel, vorzugsweise zwischen 4 % und 10 % an Bindemittel, umfasst, nach gewichtsmäßigem Gehalt bezogen auf das Material.

11. Verfahren zur Herstellung eines Beschichtungsmaterials, das für den Straßenbau und die Bautechnik bestimmt ist, nach einem der vorhergehenden Ansprüche, **dadurch gekennzeichnet, dass** eine Gesteinskörnung und ein nicht-bituminöses Bindemittel, das zur Familie der Cellulose-Fettsäureester gehört, bei einer Temperatur vermischt werden, die höher als die Schmelztemperatur des Bindemittels ist.
